# DEMANDE DE BREVET EUROPEEN

(11) **EP 2 015 171 A1**
(43) Date de publication de la demande: **14.01.2009**
(21) Numéro de dépôt: 07301194.2
(22) Date de dépôt: 29.06.2007
(51) Int. Cl.: G06F 7/72

(54) **Procédé cryptographique comprenant une exponentiation modulaire sécurisée contre les attaques à canaux cachés sans la connaissance de l'exposant public, cryptoprocesseur pour la mise en oeuvre du procédé et carte à puce associée**

(71) Demandeur: GEMPLUS, 13420 Gémenos (FR)
(72) Inventeur: Feix, Benoît, 13600 La Ciotat (FR); Ciet, Mathieu, 83270 St Cyr sur Mer (FR)

(57) **Abrégé**

L'invention concerne Procédé cryptographique comprenant une exponentiation modulaire sécurisée contre les attaques à canaux cachés ne nécessitant pas la connaissance de l'exposant public, crypto processeur pour la mise en oeuvre du procédé et carte à puce associée.

Le procédé selon l'invention destiné à chiffrer un message M, comprend une exponentiation modulaire et les étapes suivantes :
- tirage d'une valeur aléatoire s,
- initialisation de variables avec l'aide de s,
- application d'un algorithme permettant de garder un invariant de boucle grâce aux propriétés du multiplicateur de Montgomery Mgt,
- démasquage du résultat afin d'obtenir la signature S du message M.

## Description

L'invention concerne un procédé cryptographique comprenant une exponentiation modulaire sécurisée contre les attaques à canaux cachés ne nécessitant pas la connaissance de l'exposant public, un crypto processeur pour la mise en oeuvre du procédé et une carte à puce associée.

L'invention porte en particulier sur un procédé cryptographique sécurisé contre les attaques à canaux cachés au cours duquel, pour réaliser une exponentiation modulaire de type S = M^{d} mod N, où M est un opérande, d un premier exposant, N est un module et S est un résultat.

De tels procédés sont notamment intéressants pour des applications asymétriques de signature et de déchiffrement. M est alors selon l'application un message à signer ou à déchiffrer. d est une clé privée. S est un résultat, selon l'application un message signé ou déchiffré.

Masquer le nombre M par un nombre aléatoire s est une contre-mesure connue pour sécuriser les opérations d'exponentiation modulaire, notamment lorsqu'elles sont implémentées dans les microcircuits de type carte à puce, contre des attaques dites par canaux auxiliaires ou à canaux cachés (en anglais Side Channel Attacks) qui permettent d'obtenir de l'information sur le nombre d. Une première contre-mesure connue du document intitulé « Timing Attack on Implementations of Diffie-Hellman, RSA, DSS and Other Systems », de Paul Kocher, Crypto 1996, LNCS Springer, consiste à tirer un aléa s, calculer se, où e est une clé privée ou publique associée à d, puis multiplier M par s^{e} (s^{e}.M), élever le résultat de la multiplication à la puissance d ((s^{e}.M)^{d}) puis réduire modulo N. d et e étant une clé publique et une clé privée associée, on a d.e = 1 modulo ϕ(N), où ϕ représente la fonction d'Euler, de sorte que le résultat ((s^{e}.M)^{d}) modulo N se simplifie pour donner (s.M^{d}) modulo N. Une division modulaire par s permet finalement d'obtenir le résultat recherché S = M^{d} mod N. Cette solution est certes efficace, mais sa mise en oeuvre est onéreuse. En effet, pour que la mesure soit efficace, il est indispensable que s^{e} soit de taille supérieure à la taille de M. Ceci suppose que s soit de grande taille, plus précisément de taille supérieure à la taille de M divisée par e. Si e est de petite taille (par exemple de moins de dix-sept), s doit être de grande taille (dans l'exemple, de plus du nombre de bits du module divisé par dix-sept). Produire des nombres aléatoires de grande taille nécessite l'utilisation d'un générateur de grande taille, qui d'une part consomme un courant important et d'autre part nécessite un temps de calcul relativement important, ce qui n'est pas toujours compatible avec des applications de type carte à puce.

Une deuxième contre-mesure, connue notamment du document de J.S. Coron, P. Paillier « Countermeasure method in an electronic component which uses on RSA-type public key cryptographie algorithm » Patent number FR 2799851. Publication date 2001-04-20. Int Pub Numb. WO0128153, consiste à utiliser deux nombres aléatoires s1, s2 pour réaliser l'opération (M+s1.N)^{d} mod (s2.N). On enlève ensuite à la fin du calcul la contribution apportée par s1 et s2, en effectuant une réduction modulo N. Comme s1 et s2 peuvent être de petite taille, leur obtention est plus aisée. Toutefois, cette méthode nécessite de réaliser des opérations modulo s2.N. Ceci nécessite l'utilisation d'un multiplieur d'une taille supérieure au module et n'est pas toujours compatible avec des applications de type carte à puce.

Ces contre-mesures ont comme inconvénient majeur de nécessiter de connaître la valeur de e, exposant public, ou de nécessiter un crypto processeur de taille supérieure à celle du module.

Un but de l'invention est de proposer une solution pour réaliser une opération modulaire de type M^{d} mod N plus intéressante que les solutions connues car ne nécessitant pas la connaissance de e, ni un crypto processeur de taille supérieure à celle du module.

Pour cela, l'invention propose de protéger efficacement l'opération d'exponentiation par un masque aléatoire, sans la connaissance de e.

On notera dans ce document
- Mgt (A, B, N) la multiplication modulaire de Montgomery de A par B modulo N,
- A et B deux entiers,
- N le modulo choisi, il définit l'ensemble {0, ..., N-1} des entiers dans lequel on fait les opérations,
- n = nombre de bits de N, soit la longueur de N en base 2,
- R = 2ⁿ, une constante co-prime avec N, et qui dépend de la taille de N,
- M le message à signer ou à déchiffrer,
- S la signature du message M ou le message déchiffré.

L'invention est un procédé cryptographique destiné à signer ou déchiffrer un message M, comprenant une exponentiation modulaire comprenant les étapes de :
- tirage d'une valeur aléatoire s,
- initialisation de variables avec l'aide de s,
- application d'un algorithme permettant de garder un invariant de boucle grâce aux propriétés du multiplicateur de Montgomery Mgt,
- démasquage du résultat afin d'obtenir le résultat S, correspondant selon les cas à la signature de M ou au message déchiffré.

Dans un mode de réalisation, l'étape de pré-calcul peut comprendre l'étape d'initialisation utilise une valeur j, calculée par j=(3s)/2, un module choisi N, la variable de Montgomery R et comprend l'initialisation d'au moins cinq variables Acc, M₂, M₀, M₁ et M₃ conformément aux opérations suivantes .
- Acc ← R^{s+1}. M mod N
- M₂ ← R^{-j+1}.M mod N
- M₀ ← R^{-3s+1} mod N
- M₁ ← R^{-3s+1}.M mod N
- M₃ ← R^{-3s+1}.M³ mod N

Dans ce cas, l'algorithme peut comporter, pour chaque bit de l'exposant d les étapes suivantes :
- élévation au carré, Acc ← Mgt(ACC, ACC,N)
- initialisation d'une variable k tel que k = dᵢdᵢ₋₁
- Si k = 2
   o Acc← Mgt (Acc, M₂, N)
   o Acc← Mgt (Acc, Acc, N)
- Sinon
   o Acc**←** Mgt(Acc, Acc, N)
   o Acc← Mgt (Acc, Mₖ, N)
- On se décale de deux bits

Dans un autre mode de réalisation, l'étape d'initialisation utilise un module choisi N, la variable de Montgomery R et comprend l'initialisation de au moins quatres variables Acc, M0, M1 et M3 conformément aux opérations suivantes :
- Acc ← R^{s+1} . M mod N
- M₀ ← R^{-s+1} mod N
- M₁ ← R^{-s+1}. M mod N
- M₃ ← R^{-3s+1}. M³ mod N

Dans ce cas, l'algorithme comporte, pour chaque bit de l'exposant d les étapes suivantes,
- élévation au carré Acc ← Mgt(Acc, Acc, N)
- si le bit en cours est égal à 1 et le bit suivant aussi, alors
   o Acc← Mgt(Acc, Acc, N),
   o Acc← Mgt (Acc, M₃, N),
   o On se décale de deux bits.
- si le bit en cours est égal à 1 et le bit suivant est égal à 0, alors
   o Acc← Mgt (Acc, M₁, N),
   o On se décale d'un bit.
- si le bit en cours est égal à 0, alors
   o Acc ← Mgt (Acc, M₀, N),
   o On se décale d'un bit.

Dans tous les cas, l'opération de démasquage comporte au moins les opérations suivantes :
- calcul de R^{-s} ,
- calcul de la signature S dudit message M, S = Mgt (Acc, R^{-s}, N), correspondant selon les cas à la signature de M ou au message déchiffré.

L'invention permet ainsi de protéger efficacement l'opération d'exponentiation par un masque aléatoire dont l'inverse est rapidement calculable, et sans randomiser le module.

L'invention concerne également un cryptoprocesseur comprenant notamment un multiplieur de Montgomery pour la mise en oeuvre d'un procédé tel que décrit ci-dessus.

L'invention concerne enfin une carte à puce comprenant un cryptoprocesseur tel que décrit ci-dessus.

Comme on l'a dit précédemment, l'invention concerne un procédé cryptographique destiné à signer ou déchiffrer un message M, comprenant une exponentiation modulaire comprenant les étapes de :
- tirage d'une valeur aléatoire s
- initialisation de variables avec l'aide de s
- application d'un algorithme permettant de garder un invariant de boucle grâce aux propriétés du multiplicateur de Montgomery Mgt,
- démasquage du résultat afin d'obtenir la signature S du message M.

L'invention est mise en oeuvre de préférence en utilisant un multiplieur de Montgomery.

Avant de décrire plus complètement le procédé de l'invention, il convient de rappeler quelques propriétés connues d'un multiplieur de Montgomery, décrites par exemple dans le document D3 (P.L. Montgomery, Modular Multiplication without trial division, Mathematics of computation, 44(170) pp 519-521, april 1985).

Un multiplieur de Montgomery permet de réaliser des multiplications du type Mgt(M,B,N) = M.B.R⁻¹ mod N. Un avantage de ce multiplieur est sa rapidité de calcul. Un inconvénient de ce multiplieur est qu'il introduit dans le calcul une constante R, appelée constante de Montgomery. R est une puissance de deux, co-première avec N : R = 2ⁿ avec n tel que R ait le même nombre de bits que N.

La constante de Montgomery est intrinsèque au multiplieur et il est nécessaire de supprimer sa contribution en amont du calcul, au cours du calcul ou à la fin. Ainsi, pour calculer S = M.B mod N, on peut par exemple calculer d'abord M.R puis Mgt(M.R,B,N) = M.B mod N. On peut également réaliser une première multiplication S₀ = Mgt(M.R, B.R, N) = M.B.R mod N puis une deuxième multiplication de type S = Mgt(1,S₀, N) = M.B mod N.

Le multiplieur de Montgomery permet également de réaliser des exponentiations modulaires de type S = MgtExp(M,B,N) = M^{B}.R^{-(B-1)} mod N ou S = MgtExp(M.R,B,N) = M^{B}.R mod N (on compense dans ce cas la constante R^{-B} introduite par le calcul en multipliant M par R en amont du calcul). Concrètement, pour réaliser une exponentiation de Montgomery, on exécute un algorithme comme par exemple celui communément appelé "square and multiply" consistant, dans une boucle indicée par i variant entre q-1 et 0, q étant la taille du nombre d, en une succession de multiplications de type Uᵢ = Mgt (Uᵢ₋₁, Uᵢ₋₁, N) et éventuellement Mgt(Uᵢ,M,N) (ou Mgt(Uᵢ,M.R,N)), selon la valeur d'un bit dᵢ de d associé à l'indice i, Uᵢ étant une variable de boucle initialisée à la valeur U_{q} = R. Cette exponentiation est expliquée plus en détails dans le document « Handbook of Applied Cryptography » par M. Menezes, P. Van Oorschot et S. Vanstone, CRC Press 1996, chapitre 14, algorithme 14.94.

Ce calcul d'exponentiation a l'avantage d'être particulièrement rapide.

Les opérations de Montgomery ont notamment les propriétés suivantes, qui seront utilisées par la suite :
Mgt (M,B,N) = M.B.R⁻¹ mod N
Mgt (M.R,B.R,N) = M.B.R mod N
Mgt (1,1,N) = Mgt(N-1,N-1,N) = R⁻¹ mod N
Mgt (M,1,N) = Mgt (N-M, N-1, N) = M.R⁻¹ mod N
MgtExp(M.R,B,N) = M^{B}.R mod N

Comme on l'a vu précédemment, les multiplications et les exponentiations de Montgomery introduisent dans le résultat une contribution fonction de la constante R de Montgomery. Cette constante peut être éliminée en fin de chaque multiplication, par exemple en réalisant une multiplication de Montgomery par R² après un calcul. Lorsque cela est possible, et notamment pour les exponentiations, il est plus facile de compenser la constante R en amont, en multipliant l'opérande par la constante R, plutôt que de compenser une puissance de R (a fortiori une puissance négative de R) en sortie.

A noter que, lors de la mise en oeuvre du procédé ci-dessus dans un crypto-processeur, un même registre ou une même partie de mémoire peut être utilisé pour mémoriser des variables intermédiaires dont le nom comprend la même lettre : M1, M2 peuvent être stockées successivement dans un registre M.

Bien sûr, dans le procédé détaillé ci-dessus, certaines étapes peuvent être déplacées ou permutées par rapport aux autres. Par exemple, dans l'étape d'initialisation, les sous-étapes peuvent être réalisées dans un ordre différent.

A noter enfin que le procédé de l'invention peut être combiné avec des procédés antérieurs pour augmenter encore la sécurité du procédé.

Par exemple, en plus du masquage de M, on pourra également utiliser un aléa s2 pour masquer N, comme décrit dans le document D2 et l'art antérieur de la présente demande. Si le théorème des restes Chinois est utilisé, on pourra de même masquer p et q par s2.

## Revendications

1. Procédé cryptographique destiné à déchiffrer ou signer un message M, comprenant une exponentiation modulaire **caractérisé en ce qu'**il comprend les étapes de :
- tirage d'une valeur aléatoire s,
- initialisation de variables avec l'aide de s,
- application d'un algorithme permettant de garder un invariant de boucle grâce aux propriétés du multiplicateur de Montgomery Mgt,
- démasquage du résultat afin d'obtenir le résultat S), correspondant selon les cas à la signature de M ou au message déchiffré.

2. Procédé selon la revendication 1 **caractérisé en ce que** l'étape d'initialisation utilise une valeur j, calculée par j=(3s)/2, un module choisi N, la variable de Montgomery R et comprend l'initialisation d'au moins cinq variables ACC, M₂, M₀, M₁ et M₃ conformément aux opérations suivantes :
- ACC ← R^{s+1}.M mod N
- M₂ ← R^{-j+1}.M mod N
- M₀ ← R^{-3s+1} mod N
- M₁ ← R^{-3s+1}.M mod N
- M₃ ← R^{-3s+1} .M³ mod N

3. Procédé selon la revendication 2 **caractérisé en ce que** l'algorithme comporte, pour chaque bit de l'exposant d les étapes suivantes,
- élévation au carré, Acc ← Mgt(Acc, Acc, N),
- initialisation d'une variable k tel que k = dᵢdᵢ₋₁,
- Si k = 2
o Acc ← Mgt (Acc, M₂, N)
o Acc ← Mgt (Acc, Acc, N)
- Sinon
o ACC **←** Mgt (Acc, Acc, N)
o ACC← Mgt (ACC, Mₖ, N)
- On se décale de deux bits.

4. Procédé selon la revendication 1 **caractérisé en ce que** l'étape d'initialisation utilise un module choisi N, la variable de Montgomery R et comprend l'initialisation de au moins quatre variables Acc, M0, M1 et M3 conformément aux opérations suivantes :
- Acc ← R^{s+1}. M mod N
- M₀ ← R^{-s+1} mod N
- M₁ ← R^{-s+1}. M mod N
- M₃ ← R^{-3s+1}. M³ mod N

5. Procédé selon la revendication 4 **caractérisé en ce que** l'algorithme comporte, pour chaque bit de l'exposant d les étapes suivantes :
- élévation au carré Acc ← Mgt (Acc, Acc, N),
- si le bit en cours est égal à 1 et le bit suivant aussi, alors
o Acc ← Mgt (Acc, Acc, N),
o Acc ← Mgt (Acc, M₃,N),
o On se décale de deux bits.
- si le bit en cours est égal à 1 et le bit suivant est égal à 0, alors
o Acc← Mgt (Acc, M₁,N),
o On se décale d'un bit.
- si le bit en cours est égal à 0, alors
o Acc ← Mgt (Acc, M₀, N),
o On se décale d'un bit.

6. Procédé selon les revendications 3 ou 5 **caractérisé en ce que** l'opération de démasquage comporte au moins les opérations suivantes :
- calcul de R^{-s},
- calcul du résultat S = Mgt(Acc, R^{-s}, N), correspondant selon les cas à la signature de M ou au message déchiffré.

7. Cryptoprocesseur comprenant notamment un multiplieur de Montgomery pour la mise en oeuvre d'un procédé selon l'une des revendications 1 à 6.

8. Carte à puce comprenant un cryptoprocesseur selon la revendication 7.
